(19) Europäisches Patentamt / European Patent Office / Office européen des brevets

(11) **EP 2 393 290 B1**

(12) **EUROPEAN PATENT SPECIFICATION**

(45) Date of publication and mention
of the grant of the patent:
**24.02.2021 Bulletin 2021/08**

(21) Application number: **10735599.2**

(22) Date of filing: **20.01.2010**

(51) Int Cl.:
*G06F 16/70* (2019.01)          *H04N 5/91* (2006.01)
*H04N 5/76* (2006.01)          *G06K 9/00* (2006.01)

(86) International application number:
**PCT/JP2010/000283**

(87) International publication number:
**WO 2010/087127 (05.08.2010 Gazette 2010/31)**

(54) **VIDEO IDENTIFIER CREATION DEVICE**

VORRICHTUNG ZUR ERZEUGUNG VON VIDEOIDENTIFIKATOREN

DISPOSITIF DE CRÉATION D'IDENTIFIANT VIDÉO

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **29.01.2009 JP 2009017808**

(43) Date of publication of application:
**07.12.2011 Bulletin 2011/49**

(60) Divisional application:
**11189664.3 / 2 423 839**

(73) Proprietor: **NEC Corporation
Tokyo 108-8001 (JP)**

(72) Inventors:
• **OAMI, Ryoma
Tokyo 108-8001 (JP)**
• **IWAMOTO, Kota
Tokyo 108-8001 (JP)**

(74) Representative: **Betten & Resch
Patent- und Rechtsanwälte PartGmbB
Maximiliansplatz 14
80333 München (DE)**

(56) References cited:
WO-A1-02/065782          WO-A1-2007/148264
JP-A- 2007 128 262          JP-A- 2008 310 775

JP-A- 2009 075 868

• KOTA IWAMOTO ET AL: "Image Signature Robust to Caption Superimposition for Video Sequence Identification", IMAGE PROCESSING, 2006 IEEE INTERNATIONAL CONFERENCE ON, IEEE, PI, 1 October 2006 (2006-10-01), pages 3185-3188, XP031049354, ISBN: 978-1-4244-0480-3
• ALEXANDER DIMAI: "<title>Spatial encoding using differences of global features</title>", PROCEEDINGS OF SPIE, 15 January 1997 (1997-01-15), pages 352-360, XP55040811, ISSN: 0277-786X, DOI: 10.1117/12.263423
• XIAOMU SONG ET AL: "Selecting Salient Frames for Spatiotemporal Video Modeling and Segmentation", IEEE TRANSACTIONS ON IMAGE PROCESSING, IEEE SERVICE CENTER, PISCATAWAY, NJ, US, vol. 16, no. 12, 1 December 2007 (2007-12-01), pages 3035-3046, XP011195252, ISSN: 1057-7149, DOI: 10.1109/TIP.2007.908283
• ERDEM C E ET AL: "Performance Measures for Video Object Segmentation and Tracking", IEEE TRANSACTIONS ON IMAGE PROCESSING, IEEE SERVICE CENTER, PISCATAWAY, NJ, US, vol. 13, no. 7, 1 July 2004 (2004-07-01), pages 937-951, XP011113588, ISSN: 1057-7149, DOI: 10.1109/TIP.2004.828427
• KOTA IWAMOTO ET AL: "Response to the Call for Proposals on Video Signature Tools", 87. MPEG MEETING; 2-2-2009 - 6-2-2009; LAUSANNE; (MOTION PICTURE EXPERT GROUP OR ISO/IEC JTC1/SC29/WG11),, no. M16171, 29 January 2009 (2009-01-29), XP030044768,

EP 2 393 290 B1

**Description**

TECHNICAL FIELD

The present invention relates to generation of video signatures for retrieving videos, which are capable of detecting similar or identical moving image segments among a plurality of moving images.

BACKGROUND ART

An exemplary device for extracting and matching features of moving images is described in Non-Patent Document 1. Fig. 9 is a block diagram showing the device described in Patent Document 1.

A block unit feature extraction unit 1000 extracts features in block units from a first video to be input, and outputs a first feature to a matching unit 1030. Another block unit feature extraction unit 1010 extracts features in block units from a second video to be input, and outputs a second feature to the matching unit 1030. A weighting coefficient calculation unit 1020 calculates a weighting value of each of the blocks based on a learning video to be input, and outputs a weighting coefficient to the matching unit 1030. The matching unit 1030 compares the first feature output from the block unit feature extraction unit 1000 with the second feature output from the block unit feature extraction unit 1010 using the weighting coefficient output from the weighting coefficient calculation unit 1020, and outputs a matching result.

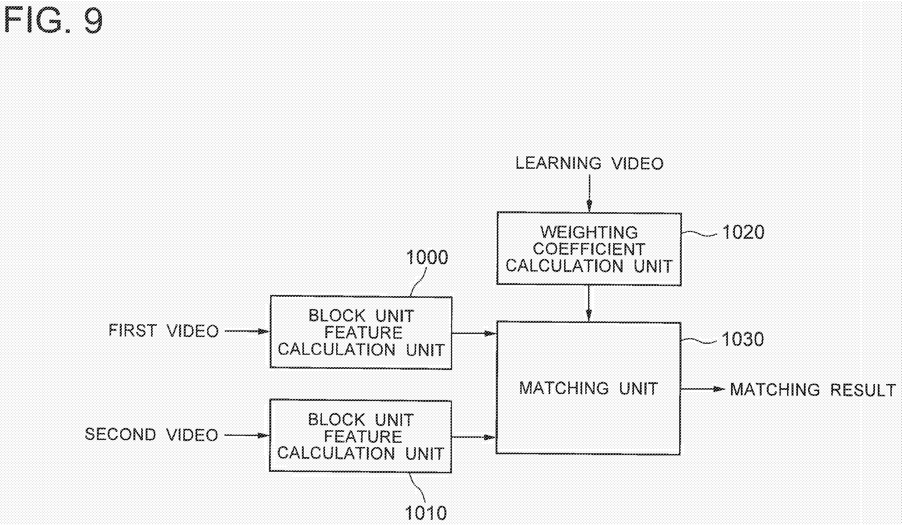

Next, operation of the device shown in Fig. 9 will be described.

The block unit feature extraction unit 1000 divides each of the frames of the input first video into blocks, and calculates a feature for identifying the video from each block. Specifically, the block unit feature extraction unit 1000 determines the type of the edge for each block, and calculates the type as a feature of each block. Then, for each of the frames, the block unit feature extraction unit 1000 forms a feature vector configured of the edge types of the respective blocks. Then, the block unit feature extraction unit 1000 calculates the feature vector of each of the frames, and outputs the acquired feature to the matching unit 1030 as the first feature.

Operation of the block unit feature extraction unit 1010 is similar to that of the block unit feature extraction unit 1000. The block unit feature extraction unit 1010 calculates the second feature from the input second video, and outputs the acquired second feature to the matching unit 1030.

On the other hand, the weighting coefficient calculation unit 1020 calculates probability that a caption is inserted in each block of a frame beforehand, using a learning video. Then, based on the calculated probability, the weighting coefficient calculation unit 1020 calculates a weighting coefficient of each block. Specifically, a weighting coefficient is calculated such that weighting becomes high as the probability of a caption being superimposed is low, in order to improve the robustness with respect to caption superimposition. The acquired weighting coefficient is output to the matching unit 1030.

The matching unit 1030 compares the first feature output from the block unit feature extraction unit 1000 with the second feature output from the block unit feature extraction unit 1010, using the weighting coefficient output from the weighting coefficient calculation unit 1020. Specifically, the matching unit 1030 compares the features of the blocks at the same position in the two frames, and calculates a score of the block unit such that the score is 1 if they are the same, and the score is 0 if they are not the same. The matching unit 1030 sums the acquired scores of the block units by weighting them with use of the weighting coefficients, and calculates a matching score of the frame (similarity in frame units). The matching unit 1030 performs these processes on the respective frames to thereby acquire a matching result between the first video and the second video.

Through these processes, it is possible to perform matching between moving images while reducing influences of caption superimposition in portions where the influences may be large, and to achieve high matching accuracy even with caption superimposition.

Non-Patent Document 1: Kota Iwamoto, Eiji Kasutani, Akio Yamada, "Image Signature Robust to Caption Superimposition for Video Sequence Identification", Proceedings of International Conference on Image Processing (ICIP2006), 2006

Non-Patent Document 2: Eiji Kasutani, Ryoma Oami, Akio Yamada, Takami Sato, and Kyoji Hirata, "Video Material Archive System for Efficient Video Editing Based on Media Identification", Proceedings of International Conference on Multimedia and Expo (ICME2004), pp.727-730, 2004

WO 2007/148264 discloses that strength of bits and BER are calculated after matching.

SUMMARY

Besides the above-described caption superimposition, there are other grounds for deteriorating matching accuracy of moving images. For example, as a scene fading out into a black frame commonly appears in many videos, such a scene deteriorates matching accuracy. Further, as features cannot be obtained stably for a frame having almost uniform values, such a frame deteriorates matching accuracy. As such, if performing matching by handling video segments in which the features have low reliability, such as similar (almost identical) video segments including scenes fading out into black frames which may occur even between independent videos, or frames having almost uniform values, in a similar manner to general segments, excessive detection or omission of detection may be caused. As a result, a problem of deterioration in matching accuracy has been caused.

An object of the present invention is to provide a system comprising a video signature generation device and a matching device, the video signature generation device being capable of solving a problem of deterioration in matching accuracy of videos, which is caused when the videos include video patterns commonly appearing in a number of videos or video patterns for which features cannot be obtained stably.

The above object is achieved with the features of the claims.

According to the present invention, it is possible to prevent deterioration in matching accuracy which is caused by video patterns commonly appearing in a number of videos or video patterns for which features cannot be obtained stably.

BRIEF DESCRIPTION OF DRAWINGS

Fig. 1 is a block diagram showing a video signature generation device of a system according to a first embodiment of the present invention.

Fig. 2 is a block diagram showing a video signature generation device of a system according to a second embodiment of the present invention.

Fig. 3 is a block diagram showing a video signature generation device of a system according to a third embodiment of the present invention.

Fig. 4 is a block diagram showing a video signature generation device of a system according to a fourth embodiment of the present invention.

Fig. 4A is a block diagram showing a video signature generation device of a system according to another embodiment of the present invention.

Fig. 5 is a block diagram showing a video signature matching device.

Fig. 5A is a block diagram showing another video signature matching device.

Fig. 6 illustrates a matching process performed on two videos.

Fig. 7 is a flowchart illustrating operation of a common video pattern learning unit 250 shown in Fig. 3.

Fig. 8 is a flowchart illustrating operation of a robustness-deteriorated video pattern learning unit 350 shown in Fig. 4.

Fig. 9 is a block diagram illustrating art related to the present invention.

EXEMPLARY EMBODIMENTS

Next, embodiments of the invention will be described in detail with reference to the drawings. It is noted that the term "embodiment(s)" concerns a system comprising a video signature extraction device and a matching device. The embodiments are to be seen as examples, whereas the claims define the invention.

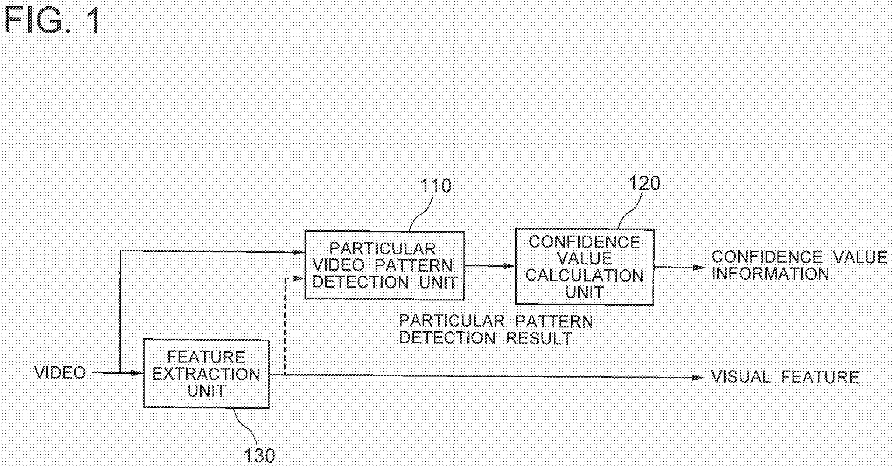

Referring to Fig. 1 showing a video signature extraction device of a system according to a first embodiment of the present invention, the device includes a feature extraction unit 130, a particular video pattern detection unit 110, and a confidence value calculation unit 120.

The feature extraction unit 130 extracts features from an input video, and outputs visual features. The particular video pattern detection unit 110 detects a particular pattern from the input video, and outputs a particular pattern detection result to the confidence value calculation unit 120. The confidence value calculation unit 120 calculates a confidence value based on the particular pattern detection result output from the particular video pattern detection unit 110, and outputs confidence value information. The visual feature output from the feature extraction unit 130 and the confidence value information output from the confidence value calculation unit 120 constitute a video signature of the input video. The visual feature and the confidence value information may be independent from each other if the correspondence relation between them is clearly defined, or integrated as in the below-described embodiment using a multiplexing unit.

Next, operation of the first embodiment will be described in detail.

First, a video is input to the feature extraction unit 130. If the original video is encoded, the video is first decoded by a decoder, and then the data is input in picture units.

It should be noted that a picture is a unit constituting a screen, and is usually formed of frames or fields. However, a picture is not limited to this configuration, and may be in any form as long as it is a unit constituting a screen. A picture may be a partial image formed by cutting out a part of a screen. In the case of an image with black bars for example, the part excluding the black bars may be handled as a picture. It should be noted that the black bars indicate margin regions inserted on top and bottom or right and left of the screen due to aspect conversion between 4:3 and 16:9.

The feature extraction unit 130 calculates a feature vector for each picture. The feature extraction unit 130 considers a picture as one still image, and extracts a vector of visual features indicating features such as colors, patterns, shapes, and the like of this picture. As the features, it is possible to use a feature vector which is obtained by calculating a difference between features of regions with respect to a pair of local regions corresponding to each dimension of the feature vector (for example, obtaining an average value of pixel values within a region with respect to each region of a pair of regions and calculating a difference in the average values between regions), and using a quantization value obtained by quantizing the difference as a value of each dimension. The feature vector, calculated for each picture, is output as visual features.

On the other hand, the input video is also input to the particular video pattern detection unit 110. The particular video pattern detection unit 110 detects video patterns which are undesirable for identifying the video, and outputs a particular pattern detection result.

Undesirable video patterns include video patterns (scenes) which appear almost identical incidentally, although which are completely different originally. For example, a scene of fading out into a black frame, which is often used in movies, is a representative example thereof. The video edit technique called fadeout is often used in many different videos. With such a technique, a scene becomes black after the fadeout regardless of the content of the original video, whereby no difference is found between the videos. As described above, an undesirable video pattern means a common video pattern which may be generated in a number of videos which are completely different actually. Those video patterns cause a problem in identification using any features, regardless of the type of the features.

On the other hand, there are also undesirable video patterns which vary according to the type of the features. Specifically, there is a case where features are unstable and lack robustness. For example, if the number of features in an image is small like a scene having flat pixel values, some features are easily affected by noise or the like so that the robustness is lowered. Although images in which the robustness is lowered depend on the features, there are video patterns in which unique robustness of the features deteriorates regardless of the features. For example, in the case of features related to colors, black and white colors have low robustness. On the other hand, in the case of features indicating patterns, flat images have low robustness.

The particular video pattern detection unit 110 detects particular video patterns as described above which are undesirable for identifying videos. The detection method depends on the video patterns. For example, in the case of a fading out scene as described above, it is possible to determine undesirable patterns using an average value of the luminance values of the entire image and a criterion indicating flatness. As a criterion indicating flatness, variance of luminance values can be used, for example. If the variance is sufficiently small and the average value of luminance is equal to or lower than a certain threshold and is sufficiently close to black, the image is determined to be a black image after the fadeout. It is also possible to measure temporal changes in luminance values to thereby determine fadeout. For example, it is possible to obtain variance values and average values of luminance values with respect to time-series pictures within the screen, and if changes occur over time such that the variance gradually decreases toward 0 and the average values gradually decease, it is determined that the scene is fadeout into a black image. While fadeout into a black image has been described above, fadeout with respect to other pixel values can be detected in a similar manner. This means that fadeout can be detected by checking whether or not average values converge on a particular value while checking variance in a similar manner.

The detected particular pattern detection result may be in a binary value indicating whether or not such a pattern is detected. For example, a value 1 is output when an undesirable pattern is detected while a value 0 is output if an undesirable pattern is not detected. It is also possible to use continuous values between 0 and 1 (or level values representing confidence indicated with several stages of levels) according to certainty (probability) when detected. This is output for each picture. The detection result may be output collectively at a constant period. The particular pattern detection result is output to the confidence value calculation unit 120.

The confidence value calculation unit 120 calculates confidence values with respect to the features of each picture according to the particular pattern detection result output from the particular video pattern detection unit 110, and outputs them. In that case, if the particular pattern detection result indicates that a particular pattern is undetected, the confidence value calculation unit 120 outputs a maximum value as a confidence value (for example, if a confidence values takes a value from 0 to 1 and 1 represents a maximum confidence value, the unit outputs 1). If the particular pattern detection result indicates that a particular pattern is detected or the possibility of detecting it is high, the confidence value calculation unit 120 lowers the confidence value according to the degree. This means that if a particular pattern is detected, a value of a minimum level is determined to be a confidence value, and if the result indicates that the possibility of detecting it is high, the confidence value is lowered according to the degree. This process is performed for each picture, and the obtained value is output as a confidence value. It is also possible to collectively obtain a confidence value for pictures at a constant period and output it.

It should be noted that in Fig. 1, it is possible to input a visual feature output from the feature extraction unit 130, instead of the video, to the particular video pattern detection unit 110 (dashed line in Fig. 1). In that case, the particular video pattern detection unit 110 estimates a particular video pattern from the input feature to thereby detect a particular pattern. Specifically, the particular video pattern detection unit 110 extracts a visual feature with respect to a video defined as a particular video pattern, and determines similarity with the input visual feature to thereby detect a particular pattern. In the case of the above-described fadeout, for example, the particular video pattern detection unit 110 calculates a particular pattern detection result by detecting whether the visual feature is close to the value of a feature corresponding to the case where the luminance values are constant in the entire screen. If an average and variance of the luminance values are used as a visual feature, it is determined that the scene fades out into a black image as described above if the variance is sufficiently small and the average value is sufficiently small. As described above, it is possible to obtain a particular video pattern from the feature itself and calculate a confidence value.

As described above, in the first embodiment, as a video pattern undesirable for identifying a video is detected and a confidence value for lowering the confidence value of the corresponding picture is generated with features, matching accuracy can be improved by using the confidence value when performing matching. Further, because detection is performed on a predetermined particular video pattern, it is possible to adopt a detection method appropriate for the particular video pattern, whereby the detection accuracy can be improved.

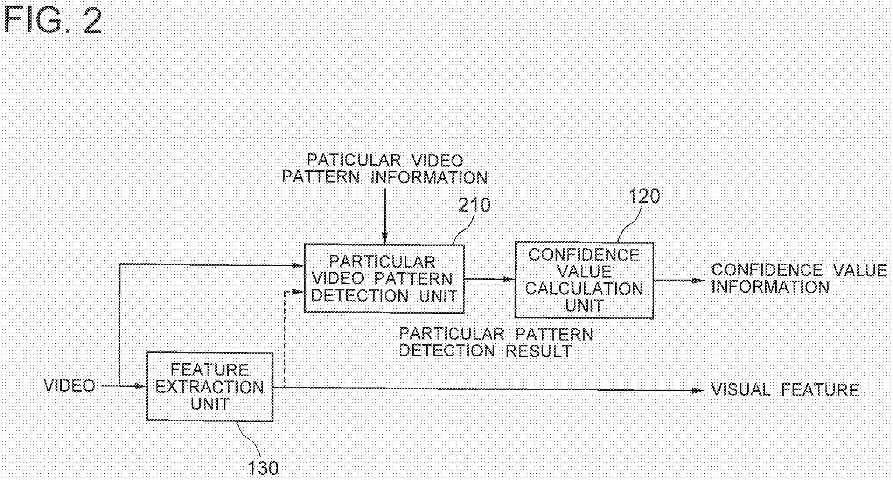

Next, a second embodiment of the present invention shown in Fig. 2 will be described with use of the drawings.

Referring to Fig. 2 showing a video signature extraction device of a system according to the second embodiment of the present invention, the device includes a feature extraction unit 130, a particular video pattern detection unit 210, and a confidence value calculation unit 120.

Compared with the case of Fig. 1, the device is similar to that shown in Fig. 1 except that the particular video pattern detection unit 210 is used instead of the particular video pattern detection unit 110. The particular video pattern detection unit 210 detects a particular pattern from a video based on input particular video pattern information, and outputs a particular pattern detection result to the confidence value calculation unit 120.

Next, operation of the video signature extraction device shown in Fig.2 will be described.

Operation of the feature extraction unit 130 and the confidence value calculation unit 120 is the same as the case of Fig. 1.

To the particular video pattern detection unit 210, a video and particular video pattern information are input. The particular video pattern information is information describing the above-described video pattern undesirable for identification, which may be a particular video itself, for example. The particular video may be one image representing the video, or a video segment constituted of a plurality of continuous images, or a plurality of images obtained from the video segment. Further, the particular video pattern information may be visual features required for detecting the particular video pattern. It should be noted that the visual features are not necessarily the same as the visual features obtained by the feature extraction unit 130. For example, in the case of the above-described fadeout into a black image, an average value and variance of the luminance values of the entire screen may be used as the features.

The particular video pattern detection unit 210 detects a particular video pattern according to the similarity between the input video and the video described in the particular video pattern information. As such, if the particular video pattern information is the image itself, the particular video pattern detection unit 210 calculates a visual feature from both the picture of the input video and the image input as the particular video pattern information, and compares their similarities to thereby detect a particular pattern. In this process, it is possible to use a distance between the features or a similarity value as the basis for determining the similarity. If the distance is small or the similarity value is large, the particular video pattern detection unit 210 defines the certainty of the detection according to the degree and outputs it as a particular pattern detection result.

On the other hand, if the particular video pattern information is a feature extracted from the image, the particular video pattern detection unit 210 extracts a feature of the same type from the input image and performs matching. For example, if the particular video pattern information is described with the feature of edge histogram, the particular video pattern detection unit 210 calculates an edge histogram for each picture from the input image. Operation after the calculation of the feature is similar to the case in which an image is input as the particular video pattern information.

It should be noted that an input to the particular video pattern detection unit 210 may be the visual feature output from the feature extraction unit 130 instead of the video (dashed line in Fig. 2). In that case, the particular video pattern detection unit 210 estimates a particular video pattern from the input feature to thereby detect a particular pattern. If the particular video pattern information is the video itself, the particular video pattern detection unit 210 extracts, from the video, a feature which can be used for performing matching with the feature output from the feature extraction unit 130, and compares them. If the particular video pattern information is a visual feature, the visual feature must be a feature which can be used for performing matching with the feature output from the feature extraction unit 130.

As described above, by calculating a similarity value or a distance with a particular video pattern, it is possible to detect an undesirable video pattern and calculate a confidence value. In the case of this method, it is possible to address various patterns by only changing information given as particular video pattern information, without determining a detection method for each particular video pattern. As such, even after the device has been manufactured, it is possible to expand the video patterns which can be supported by the device by only changing the particular video pattern information.

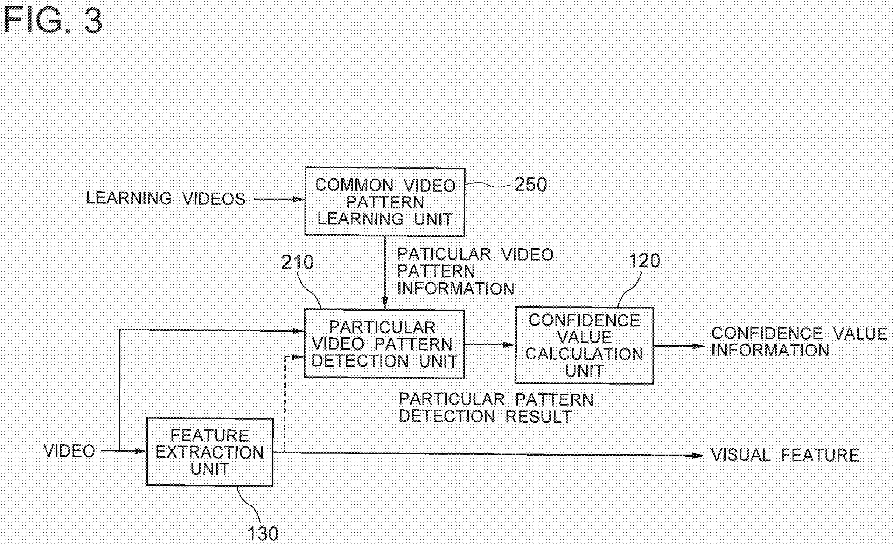

Next, a third embodiment of the present invention shown in Fig. 3 will be described with use of the drawings.

Referring to Fig. 3 showing a video signature extraction device of a system according to the third embodiment of the present invention, the device includes a feature extraction unit 130, a particular video pattern detection unit 210, a confidence value calculation unit 120, and a common video pattern learning unit 250. Compared with the case of Fig. 2, the device is similar to the video signature extraction device shown in Fig. 2 except that the common video pattern learning unit 250 is added and particular video pattern information output therefrom is connected to the particular video pattern detection unit 210.

Next, operation of the third embodiment will be described.

Operation of the feature extraction unit 130, the particular video pattern detection unit 210, and the confidence value calculation unit 120 is the same as the case of Fig. 2.

To the common video pattern learning unit 250, a group of learning videos are input. The videos input in this process are desirably a group of videos which have been produced independently and have no derivation relation with each other. This means the videos desirably have no relation such as one video being generated by editing another video. The common video pattern learning unit 250 extracts video segments which are almost identical coincidently to each other from the group of videos. Specifically, the common video pattern learning unit 250 calculates features of each video for each picture, and performs calculation of the distance (similarity value) between them on a plurality of pairs of videos. As a result, if video segments which can be considered as almost identical are found even although they are independent videos, the video segments are extracted as particular video pattern information. Thereby, it is possible to automatically extract a particular video pattern through learning, rather than manually determining the particular video pattern. It should be noted that the particular video pattern information may be features extracted from a video, rather than the video itself, as described above. In that case, the common video pattern learning unit 250 calculates the features of the extracted video pattern, and outputs them as particular video pattern information.

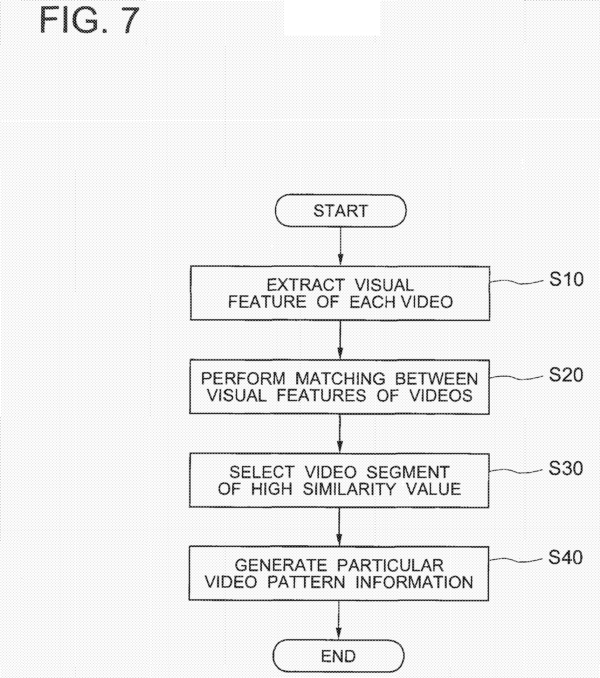

Fig. 7 is a flowchart showing the operation of the common video pattern learning unit 250.

At step S10, a visual feature is extracted from each of the input videos. The visual feature extraction method used at this step is not necessarily the same as that used by the feature extraction unit 130.

At step S20, matching is performed between the extracted visual features. Thereby, a matching result between any two pairs of videos for a learning video to be input is obtained.

Then, at step S30, video segments having a high similarity value (or small distance) are extracted from the matching results.

At step S40, information of the extracted video segments is output as particular video pattern information.

The particular video pattern information, output as described above, is input to the particular video pattern detection unit 210.

With the third embodiment, it is possible to automatically extract undesirable video patterns, particularly, a common video pattern which is generated in a number of completely different videos, from a plurality of videos.

Next, a fourth embodiment will be described with use of the drawings.

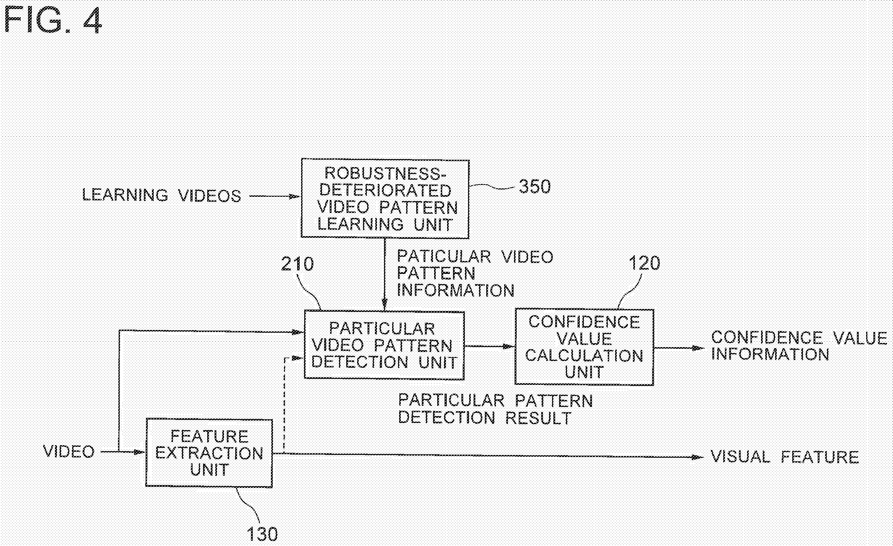

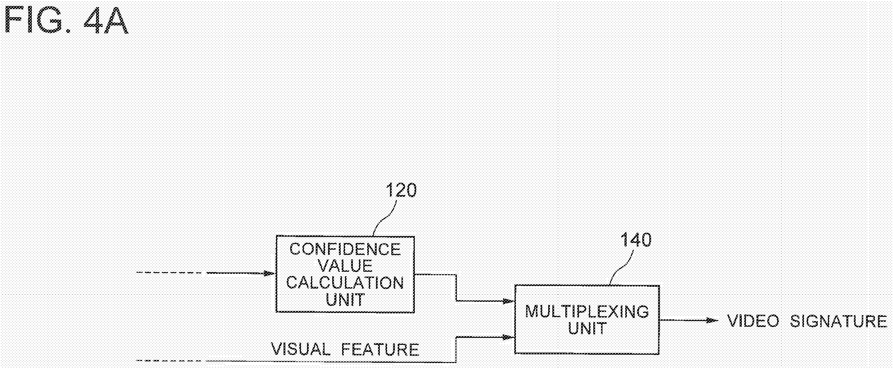

Referring to Fig. 4 showing a video signature extraction device of a system according to the fourth embodiment of the present invention, the device includes a feature extraction unit 130, a particular video pattern detection unit 210, a confidence value calculation unit 120, and a robustness-deteriorated video pattern learning unit 350. Compared with the case of Fig. 3, the device is similar to the video signature extraction device shown in Fig. 3 except that the robustness-deteriorated video pattern learning unit 350 is used instead of the common video pattern learning unit 250.

Next, operation of the fourth embodiment will be described.

Operation of the feature extraction unit 130, the particular video pattern detection unit 210, and the confidence value calculation unit 120 is the same as the case of Fig. 2.

To the robustness-deteriorated video pattern learning unit 350, a group of learning videos are input. The group of learning videos are used for learning video patterns in which the visual features used in the feature extraction unit 130 are less robust. In the robustness-deteriorated video pattern learning unit 350, a visual feature is extracted from a video by means of a feature extraction method which is the same as that used in the feature extraction unit 130. At the same time, various alteration processes (encoding process, noise addition, caption superimposition, etc.) are performed, and after those processes, feature extraction is performed similarly. Then, the visual feature before the processes and the visual feature after the processes are compared to check how it changes. Specifically, a distance or a similarity value is calculated between the features before and after the processes. In that case, if a video in which the similarity value decreases or the distance value increases is found, it is extracted as particular video pattern information. Specifically, a similarity value or a distance value is processed using a threshold, and a case where the similarity value becomes smaller than a certain threshold or where the distance value becomes larger than a certain threshold is extracted. Thereby, it is possible to automatically extract a particular video pattern through learning, rather than determining it manually. It should be noted that the particular video pattern information may be features extracted from the video, rather than the video itself, as described above. In that case, the features of the extracted video pattern are calculated and output as particular video pattern information.

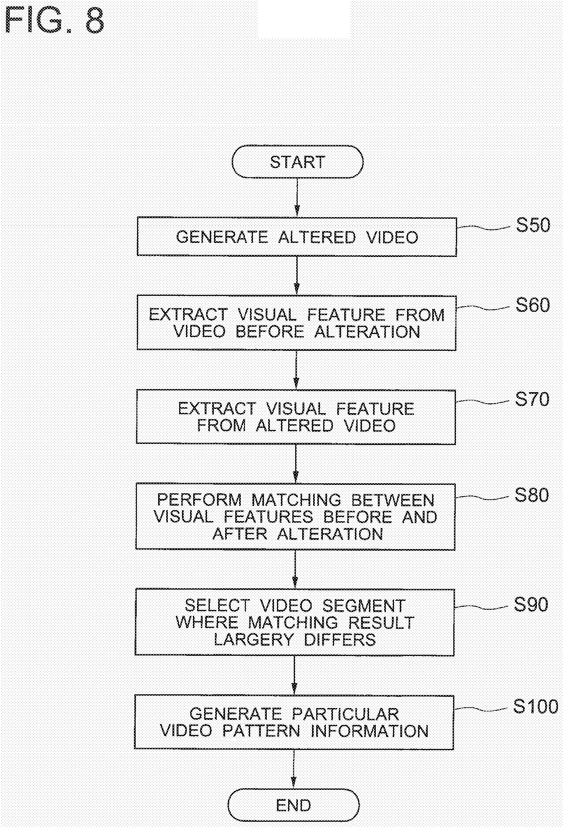

Fig. 8 is a flowchart showing the operation of the robustness-deteriorated video pattern learning unit 350. First, at step S50, an altered video is generated. At this step, an altered video is generated by applying various expected alteration processes to the input video. These processes may be performed after step S60 described below, if it is performed before step S70.

At step S60, a visual feature is extracted from the video before alteration. A feature extraction method used at this step is the same as that used in the feature extraction unit 130. Thereby, a visual feature is calculated for each video before alteration.

At step S70, a visual feature is extracted from the altered video. In this step, a visual feature is extracted for each of the altered video generated at step S50. A feature extraction method used in this step is the same as that used in the feature extraction unit 130. Thereby, a visual feature is calculated for each altered video.

At step S80, matching is performed on the visual features before and after the alteration. In this step, matching is performed between the visual features of the corresponding features before and after the alteration. In this matching, matching is performed by correlating the pictures before and after the alteration. Then, a matching result is output for each picture or each video segment formed by putting together a plurality of pictures in a time-series manner.

Then, at step S90, a video segment in which the distance between features is large or a similarity value between them is small is extracted from the matching result.

Finally, at step S100, particular video pattern information is generated from the videos of the extracted video segments, and outputs it.

The particular video pattern information output in this manner is input to the particular video pattern detection unit 210.

With the fourth embodiment, it is possible to automatically extract undesirable video patterns from a number of videos, as the case of the third embodiment.

Next, a matching device for a video signature, generated by the video signature extraction device shown in Figs. 1 to 4, will be described.

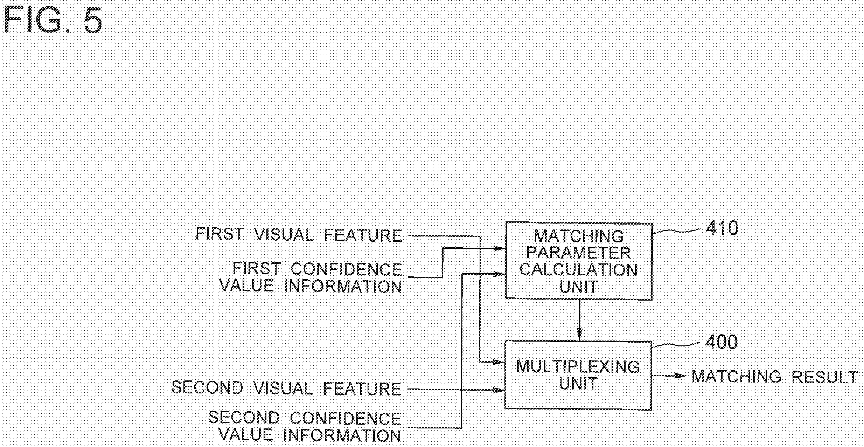

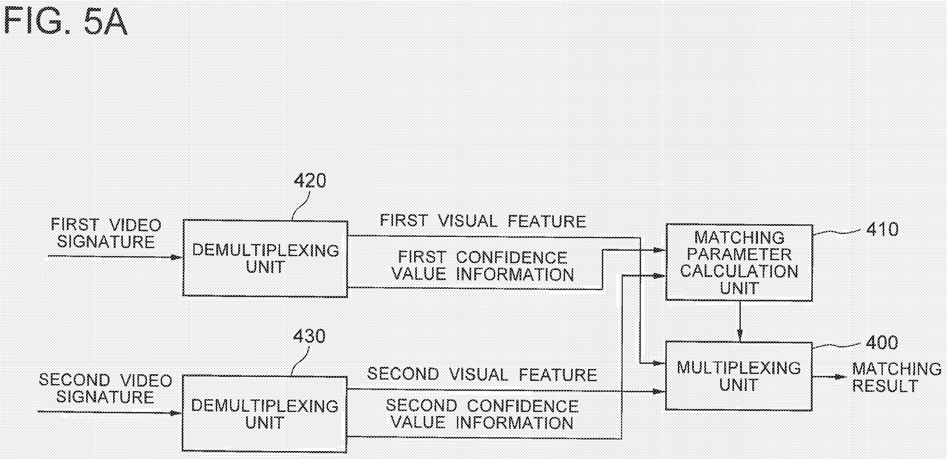

Referring to Fig. 5 showing a video signature matching device for performing matching on video signatures generated by the video signature extraction device shown in Figs. 1 to 4, the video signature matching device includes a matching parameter calculation unit 410 and a matching unit 400.

The matching parameter calculation unit 410 obtains matching parameters from first confidence value information and second confidence value information, and outputs them to the matching unit 400. The matching unit 400 performs matching between the first visual feature and the second visual feature using the matching parameters, and outputs a matching result. It should be noted that the first visual feature and the first confidence value information constitute a video signature of a first video, and the second visual feature and the second confidence value information constitute a video signature of a second video.

Next, operation of the video signature matching device shown in Fig. 5 will be described.

First, first confidence value information acquired from the first video and second confidence value information acquired from the second video are input to the matching parameter calculation unit 410. The matching parameter calculation unit 410 calculates a matching parameter to be used for matching between the segments of the first video and the second video, from the first confidence value information and the second confidence value information. For example, from the first confidence value information and the second confidence value information, a weighting coefficient used for performing matching on each picture is calculated as a matching parameter.

While there are a plurality of methods of calculating a weighting coefficient from the first confidence value information and the second confidence value information, any method can be used if a condition that the weighting coefficient decreases when either one of the confidence values corresponds to a small value and the weighting coefficient increases when both weighting values corresponding to the confidence value information increase, is satisfied. For example, if a confidence value of the $k_1$th picture of the first video and a confidence value of the $k_2$th picture of the second video, acquired from the first confidence value information and the second confidence value information, are respectively $r_1(k_1)$ and $r_2(k_2)$, a weighting coefficient $w(ki, k_2)$ to be used for performing matching between those pictures can be calculated by Expression 1.

[Expression 1]

$$w(k_1, k_2) = \min(r_1(k_1), r_2(k_2))$$

The matching unit 400 performs matching on the first visual feature and the second visual feature. They may be compared using a similarity value indicating similarity between both features, or using a distance indicating the level of difference between both features. In the case of comparing them using a distance, comparison will be performed based on a distance d calculated by Expression 2.

[Expression 2]

$$d = \sum_{i=1}^{N} |v_1(i) - v_2(i)|$$

It should be noted that N represents the number of dimensions of the feature, and vi(i) and $v_2$(i) respectively represent values of the $i^{th}$ dimension of the first and second features. The comparison is performed in picture units, and certain segments of the first video and the second video are compared. In this process, the weighting coefficient w(ki, k2) is used. For example, in the case of performing matching between video segments with use of values that are calculated by averaging distance values obtained through comparison in picture units within the video segments, when calculating the average value, a distance value d(ki, k2) calculated from comparison between the $k_1^{th}$ picture of the first video and the $k_2^{th}$ picture of the second video is weighted with the weighting coefficient w(ki, $k_2$). As such, when comparing the segment consisting of K pictures beginning with the $t_1^{th}$ picture of the first video with the segment consisting of K pictures beginning with the $t_2^{th}$ picture of the second video, a distance value is calculated by Expression 3.

[Expression 3]

$$D = \frac{\sum_{k=0}^{K-1} w(t_1 + k, t_2 + k) d(t_1 + k, t_2 + k)}{\sum_{k=0}^{K-1} w(t_1 + k, t_2 + k)}$$

If this value is larger than a threshold, it is determined that the segments are not identical to each other, while if this value is a threshold or smaller, it is determined that the segments are identical to each other. By performing this process on combinations of any segments of the first video and the second video, all of the identical segments having any length included in the first video and the second video can be determined.

Alternatively, it is also possible to acquire the number of pairs of pictures in which the distance values are equal to or smaller than a threshold by performing comparison in picture units, and if the number is large enough compared with the number of pictures included in the segments, the segments are determined to be identical, while if not, the segments are determined to be non-identical. Even in this case, determination can be performed by weighting in the same manner. As such, it is also possible to perform determination by Expression 4.

[Expression 4]

$$n = \frac{\sum_{k=0}^{K-1} w(t_1 + k, t_2 + k) U(Th - d(t_1 + k, t_2 + k))}{\sum_{k=0}^{K-1} w(t_1 + k, t_2 + k)}$$

U(x) represents a unit step function which results in 1 when x≥0 and results in 0 when x<0, and Th represents a threshold of a distance between features of the pictures (that is, if the distance is equal to or smaller than Th, the segments are determined to be identical, and if not, the segments are determined to be non-identical). By performing this process on combinations of any segments of the first video and the second video, all of the identical segments having any length included in the first video and the second video can be determined.

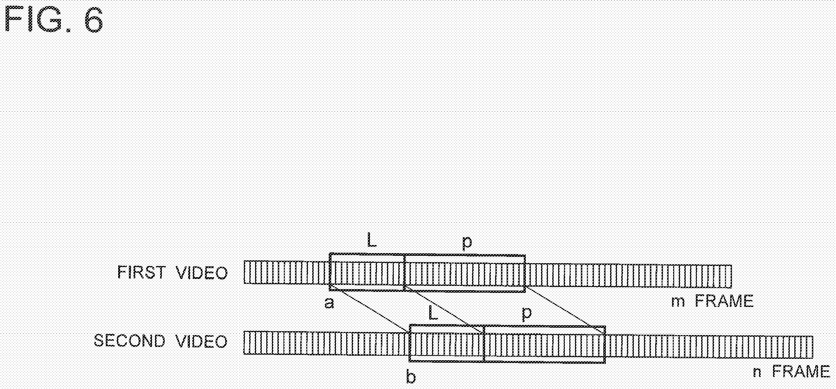

As a method of comparing segments of any length, the matching method described in Non-Patent Document 2 can also be used. As shown in Fig. 6, for matching between videos, a matching window having a length of L pictures is provided, and the window is caused to slide on the first video and the second video respectively, and both are compared. If the segments within the matching windows are determined to be identical, the matching window is extended by a length of p pictures so as to continue the matching process. As long as both segments are determined to be identical, the process of extending the matching window by p pictures is repeated so as to obtain the identical segments of a maximum length. Thereby, the identical segments of a maximum length can be acquired effectively.

It should be noted that although the case of using a distance as a criterion has been described above, matching can also be performed using a similarity value. In that case, comparison is specifically performed using a similarity value S calculated by Expression 5.

[Expression 5]

$$S = \sum_{i=1}^{N} Sim(v_1(i), v_2(i))$$

Sim(x, y) is a function indicating closeness between x and y, and the value becomes larger as the values of x and y are closer. For example, if the distance between x and y is d(x, y), a function shown as Expression 6 can be used.

[Expression 6]

$$Sim(x, y) = \frac{1}{1 + d(x, y)}$$

Alternatively, Sim(x, y) may be a function that returns 1 when x and y match, and returns 0 otherwise, as Kronecker delta. Alternatively, if an angle (cosine value) between feature vectors is used as a similarity value, comparison is performed based on the similarity value S calculated by Expression 7.

[Expression 7]

$$S = \frac{\sum_{i=1}^{N} v_1(i) v_2(i)}{\left(\sqrt{\sum_{i=1}^{N} v_1(i)^2}\right)\left(\sqrt{\sum_{i=1}^{N} v_2(i)^2}\right)}$$

Thereby, a matching result between the first video signature and the second video signature is obtained.

Further, a matching parameter to be output from the matching parameter calculation unit 410 may be a parameter for determining whether or not to disregard the matching result of the corresponding pictures. If one of the pictures to be compared has low confidence value, the matching result between the pictures is not highly reliable. In that case, matching between videos may be performed without using such a matching result of the pictures. For example, when comparing a video 1 with a video 2, if the fifth to ninth pictures of the video 1 have low confidence values, comparison between the video segments of the video 1 and the video 2 will be performed without using the matching results between the pictures with respect to the fifth to ninth pictures of the video 1.

Alternatively, a matching parameter to be output from the matching parameter calculation unit 410 may be a parameter for describing the number of times that the pictures are determined to be different in the matching process performed between the pictures. In an alteration process such as analog capture, not all of the pictures are accurately captured and some pictures may be lost. In that case, comparison may not be performed well due to the lost pictures, although they are the identical videos. In that case, the number of matching failures allowed in matching of the pictures is decided beforehand, and if the number is equal to or smaller than the decided number, matching will be continued (this means that matching is terminated only when the number of failures in matching exceeds the decided number), whereby continuous segments can be compared successfully. The allowable number (referred to as $N_{th}$) of failures in matching between pictures is controlled by the confidence value. For example, in the segments of low confidence values,

the value of $N_{th}$ is incremented in accordance with the number of pictures of low confidence values. In this way, even if pictures with low confidence values continue, they can be compared as continuous segments.

While the exemplary embodiments of the present invention have been described, the present invention is not limited to these embodiments. It will be understood by those ordinary skill in the art that various changes may be made without departing from the scope of the claims.

For example, as shown in Fig. 4A, the video signature generation device may include a multiplexing unit 140, to which a visual feature output from the feature extraction unit 130 and confidence value information output from the confidence value calculation unit 120 are input, and which outputs a video signature. The multiplexing unit 140 generates the video signature by multiplexing the visual feature output from the feature extraction unit 130 and the confidence value information output from the confidence value calculation unit 120, and outputs the generated video signature. The multiplexing unit 140 generates the video signature by multiplexing them in a separable form when being compared. Multiplexing may be performed by various methods, including, a method in which a visual feature and confidence value information are interleaved for each picture, a method in which every confidence value information is first multiplexed and then visual features are multiplexed (or vice versa), and a method in which confidence value information and a visual feature are multiplexed for each predetermined segment (e.g., in time segment units for calculating confidence value information).

As shown in Fig. 5A, the video signature matching device may include demultiplexing units 420 and 430, to which video signatures of two images for performing matching are input, and which output visual features and confidence value information constituting the video signatures. The demultiplexing unit 420 separates the first visual feature and the first confidence value information from the first video signature input thereto, and outputs them to the matching unit 400 and to the matching parameter calculation unit 410, respectively. Similarly, the demultiplexing unit 430 separates the second visual feature and the second confidence value information from the second video signature input thereto, and outputs them to the matching unit 400 and to the matching parameter calculation unit 410, respectively.

Further, regarding the video signature extraction device and the video signature matching device, the functions thereof can be realized by computers and programs, as well as hardware. Such a program is provided in the form of being written on a computer readable recording medium such as a magnetic disk, a semiconductor memory, or the like, is read when the computer is started for example, and controls operation of the computer, to thereby allow the computer to function as a video signature extraction device or a video signature matching device described above.

INDUSTRIAL APPLICABILITY

The present invention is applicable to retrieval of similar or identical videos from various videos with high accuracy. In particular, regarding retrieval of the identical segments of videos, the present invention is applicable to identification of illegally copied moving images distributed on the networks and identification of commercials distributed on actual airwaves.

**Claims**

1. A system comprising a video signature extraction device for extracting a video signature from a video, and a matching device for performing matching using the extracted video signature for retrieval of a similar or identical video or videos from various videos, the video signature extraction device comprising:

    a frame signature extraction unit (130) that extracts a frame signature from a video frame of the video, wherein the frame signature extraction unit calculates a value, with respect to each of one or more dimensions, of the frame signature using a difference between features of two sub-regions associated with said dimension, and
    a confidence value calculation unit (120) that calculates, for the video frame, a confidence value of the frame signature, wherein
    the confidence value is a value from a predetermined minimum value to a predetermined maximum value for the entire frame signature, the confidence value representing a certainty of a matching result when the matching device performs matching using the frame signature between the corresponding video frame and a video frame of another video,
    the confidence value calculation unit (120) is configured to calculate, if the video frame is a particular pattern, a confidence value that is smaller compared to a case in which the video frame is other than the particular pattern, and
    the particular pattern is of a video frame having uniform luminance values or having a variance of luminance values that is equal or lower than a threshold.

**2.** The system according to Claim 1, wherein the particular pattern is of a black video frame which has an average of luminance values that is equal to or lower than a certain threshold.

**3.** The system according to Claim 1 or 2, wherein the feature is an average pixel value of the sub-region.

**4.** A method of extracting a video signature from a video, and matching using the extracted video signature for retrieval of a similar or identical video or videos from various videos, the method comprising:

when extracting a frame signature from a video frame of the video, calculating a value, with respect to each of one or more dimensions, of the frame signature using a difference between features of two sub-regions associated with said dimension, and
calculating, for the video frame, a confidence value of the frame signature, wherein
the confidence value is a value from a predetermined minimum value to a predetermined maximum value for the entire frame signature, the confidence value representing a certainty of a matching result when matching is performed using the frame signature between the corresponding video frame and a video frame of another video,
the calculating the confidence value includes calculating if the video frame is a particular pattern, a confidence value that is smaller compared to a case in which the video frame is other than the particular pattern, and
the particular pattern is of a video frame having uniform luminance values or having a variance of luminance values that is equal or lower than a threshold.

**5.** The method according to Claim 4, wherein the particular pattern is of a black video frame which has an average of luminance values that is equal to or lower than a certain threshold.

**6.** The method according to Claim 4 or 5, wherein the feature is an average pixel value of the sub-region.

**7.** A computer program comprising instructions for causing a computer to execute the method according to any of Claims 4 to 6.

**Patentansprüche**

**1.** System, das eine Videosignatur-Extraktionsvorrichtung zum Extrahieren einer Videosignatur aus einem Video und eine Abgleichvorrichtung zum Durchführen eines Abgleichs unter Verwendung der extrahierten Videosignatur zur Auffindung von einem oder mehreren ähnlichen oder identischen Videos aus verschiedenen Videos umfasst, wobei die Videosignatur-Extraktionsvorrichtung folgendes umfasst:

eine Framesignatur-Extraktionseinheit (130), die eine Framesignatur aus einem Videoframe des Videos extrahiert, wobei die Framesignatur-Extraktionseinheit einen Wert, in Bezug auf jede von einer oder mehreren Dimensionen, der Framesignatur unter Verwendung eines Unterschieds zwischen Merkmalen von zwei mit der Dimension assoziierten Unterbereichen berechnet, und
eine Vertrauenswert-Berechnungseinheit (120), die für den Videoframe einen Vertrauenswert der Framesignatur berechnet, wobei
der Vertrauenswert ein Wert von einem vorbestimmten minimalen Wert bis zu einem vorbestimmten maximalen Wert für die gesamte Framesignatur ist, wobei der Vertrauenswert eine Sicherheit eines Abgleichergebnisses darstellt, wenn die Abgleichvorrichtung einen Abgleich unter Verwendung der Framesignatur zwischen dem entsprechenden Videoframe und einem Videoframe eines anderen Videos durchführt,
die Vertrauenswert-Berechnungseinheit (120) konfiguriert ist, um dann, wenn der Videoframe ein besonderes Muster ist, einen Vertrauenswert zu berechnen, der verglichen mit einem Fall kleiner ist, in welchem der Videoframe anders als das besondere Muster ist, und
das besondere Muster von einem Videoframe ist, der einheitliche Luminanzwerte hat oder der eine Varianz von Luminanzwerten hat, die gleich einer Schwelle oder niedriger als diese ist.

**2.** System nach Anspruch 1, wobei das besondere Muster von einem schwarzen Videoframe ist, der einen Durchschnitt von Luminanzwerten hat, der gleich einer gewissen Schwelle oder niedriger als diese ist.

**3.** System nach Anspruch 1 oder 2, wobei das Merkmal ein durchschnittlicher Pixelwert des Unterbereichs ist.

**4.** Verfahren zum Extrahieren einer Videosignatur aus einem Video und zum Abgleichen unter Verwendung der extrahierten Videosignatur zur Auffindung von einem oder mehreren ähnlichen oder identischen Videos aus verschiedenen Videos, wobei das Verfahren folgendes umfasst:

wenn eine Framesignatur aus einem Videoframe des Videos extrahiert wird, Berechnen eines Werts, in Bezug auf jede von einer oder mehreren Dimensionen, der Framesignatur unter Verwendung eines Unterschieds zwischen Merkmalen von zwei mit der Dimension assoziierten Unterbereichen, und
Berechnen, für den Videoframe, eines Vertrauenswerts der Framesignatur, wobei
der Vertrauenswert ein Wert von einem vorbestimmten minimalen Wert bis zu einem vorbestimmten maximalen Wert für die gesamte Framesignatur ist, wobei der Vertrauenswert eine Sicherheit eines Abgleichergebnisses darstellt, wenn ein Abgleichen unter Verwendung der Framesignatur zwischen dem entsprechenden Videoframe und einem Videoframe eines anderen Videos durchgeführt wird,
das Berechnen des Vertrauenswerts dann, wenn der Videoframe ein besonderes Muster ist, ein Berechnen eines Vertrauenswerts enthält, der verglichen mit einem Fall kleiner ist, in welchem der Videoframe anders als das besondere Muster ist, und
das besondere Muster von einem Videoframe ist, der einheitliche Luminanzwerte hat oder der eine Varianz von Luminanzwerten hat, die gleich einer Schwelle oder niedriger als diese ist.

**5.** Verfahren nach Anspruch 4, wobei das besondere Muster von einem schwarzen Videoframe ist, der einen Durchschnitt von Luminanzwerten hat, der gleich einer gewissen Schwelle oder niedriger als diese ist.

**6.** Verfahren nach Anspruch 4 oder 5, wobei das Merkmal ein durchschnittlicher Pixelwert des Unterbereichs ist.

**7.** Computerprogramm, das Anweisungen zum Veranlassen umfasst, dass ein Computer das Verfahren nach einem der Ansprüche 4 bis 6 ausführt.

**Revendications**

**1.** Système comprenant un dispositif d'extraction de signature vidéo pour extraire une signature vidéo d'une vidéo, et un dispositif d'appariement pour réaliser un appariement à l'aide de la signature vidéo extraite pour la récupération d'une vidéo ou de vidéos similaire(s) ou identique(s) à partir de diverses vidéos, le dispositif d'extraction de signature vidéo comprenant :

une unité d'extraction de signature d'image (130) qui extrait une signature d'image d'une image vidéo de la vidéo, dans lequel l'unité d'extraction de signature d'image calcule une valeur, par rapport à chacune d'une ou de plusieurs dimensions, de la signature d'image à l'aide d'une différence entre des caractéristiques de deux sous-régions associées à ladite dimension, et
une unité de calcul de valeur de confiance (120) qui calcule, pour l'image vidéo, une valeur de confiance de la signature d'image, dans lequel
la valeur de confiance est une valeur entre une valeur minimale prédéterminée et une valeur maximale prédéterminée pour la signature d'image entière, la valeur de confiance représentant une certitude d'un résultat d'appariement lorsque le dispositif d'appariement réalise un appariement à l'aide de la signature d'image entre l'image vidéo correspondante et une image vidéo d'une autre vidéo,
l'unité de calcul de valeur de confiance (120) est configurée pour calculer, si l'image vidéo est un motif particulier, une valeur de confiance qui est plus petite en comparaison à un cas où l'image vidéo est autre que le motif particulier, et
le motif particulier est celui d'une image vidéo ayant des valeurs de luminance uniformes ou ayant une variance de valeurs de luminance qui est inférieure ou égale à un seuil.

**2.** Système selon la revendication 1, dans lequel le motif particulier est celui d'une image vidéo noire qui a une moyenne de valeurs de luminance qui est inférieure ou égale à un certain seuil.

**3.** Système selon la revendication 1 ou 2, dans lequel la caractéristique est une valeur de pixel moyenne de la sous-région.

**4.** Procédé d'extraction d'une signature vidéo d'une vidéo, et d'appariement à l'aide de la signature de vidéo extraite pour la récupération d'une vidéo ou de vidéos similaire(s) ou identique(s) à partir de diverses vidéos, le procédé comprenant :

lors de l'extraction d'une signature d'image d'une image vidéo de la vidéo, le calcul d'une valeur, par rapport à chacune d'une ou de plusieurs dimensions, de la signature d'image à l'aide d'une différence entre des caractéristiques de deux sous-régions associées à ladite dimension, et
le calcul, pour l'image vidéo, d'une valeur de confiance de la signature d'image, dans lequel
la valeur de confiance est une valeur entre une valeur minimale prédéterminée et une valeur maximale prédéterminée pour la signature d'image entière, la valeur de confiance représentant une certitude d'un résultat d'appariement lorsqu'un appariement est réalisé à l'aide de la signature d'image entre l'image vidéo correspondante et une image vidéo d'une autre vidéo,
le calcul de la valeur de confiance comporte le calcul, si l'image vidéo est un motif particulier, d'une valeur de confiance qui est plus petite en comparaison à un cas où l'image vidéo est autre que le motif particulier, et
le motif particulier est celui d'une image vidéo ayant des valeurs de luminance uniformes ou ayant une variance de valeurs de luminance qui est inférieure ou égale à un seuil.

5. Procédé selon la revendication 4, dans lequel le motif particulier est celui d'une image vidéo noire qui a une moyenne de valeurs de luminance inférieure ou égale à un certain seuil.

6. Procédé selon la revendication 4 ou 5, dans lequel la caractéristique est une valeur de pixel moyenne de la sous-région.

7. Programme d'ordinateur comprenant des instructions pour amener un ordinateur à exécuter le procédé selon l'une quelconque des revendications 4 à 6.

# FIG. 1

VIDEO → FEATURE EXTRACTION UNIT (130)

PARTICULAR VIDEO PATTERN DETECTION UNIT (110) → CONFIDENCE VALUE CALCULATION UNIT (120) → CONFIDENCE VALUE INFORMATION

PARTICULAR PATTERN DETECTION RESULT

FEATURE EXTRACTION UNIT → VISUAL FEATURE

FIG. 2

PATICULAR VIDEO
PATTERN INFORMATION

210

120

VIDEO → FEATURE EXTRACTION UNIT → PARTICULAR VIDEO PATTERN DETECTION UNIT → CONFIDENCE VALUE CALCULATION UNIT → CONFIDENCE VALUE INFORMATION

PARTICULAR PATTERN DETECTION RESULT

VISUAL FEATURE

130

EP 2 393 290 B1

# FIG. 3

LEARNING VIDEOS → [COMMON VIDEO PATTERN LEARNING UNIT] ~ 250

PATICULAR VIDEO PATTERN INFORMATION

210

[PARTICULAR VIDEO PATTERN DETECTION UNIT]

120

[CONFIDENCE VALUE CALCULATION UNIT] → CONFIDENCE VALUE INFORMATION

PARTICULAR PATTERN DETECTION RESULT

VIDEO → [FEATURE EXTRACTION UNIT] → VISUAL FEATURE

130

FIG. 4

LEARNING VIDEOS → ROBUSTNESS-DETERIORATED VIDEO PATTERN LEARNING UNIT — 350

PATICULAR VIDEO PATTERN INFORMATION

210 → PARTICULAR VIDEO PATTERN DETECTION UNIT

120 → CONFIDENCE VALUE CALCULATION UNIT → CONFIDENCE VALUE INFORMATION

PARTICULAR PATTERN DETECTION RESULT

VIDEO → FEATURE EXTRACTION UNIT → VISUAL FEATURE

130

EP 2 393 290 B1

# FIG. 4A

VISUAL FEATURE

EP 2 393 290 B1

# FIG. 5

FIRST VISUAL FEATURE

FIRST CONFIDENCE
VALUE INFORMATION

MATCHING
PARAMETER
CALCULATION
UNIT — 410

400

MULTIPLEXING
UNIT — MATCHING RESULT

SECOND VISUAL FEATURE

SECOND CONFIDENCE
VALUE INFORMATION

EP 2 393 290 B1

# FIG. 5A

# FIG. 6

FIRST VIDEO

L    p

a

m FRAME

SECOND VIDEO

L    p

b

n FRAME

# FIG. 7

```
          ┌──────────┐
          │  START   │
          └────┬─────┘
               │
               ▼
   ┌──────────────────────────┐
   │    EXTRACT  VISUAL       │─── S10
   │  FEATURE  OF  EACH VIDEO │
   └────────────┬─────────────┘
                │
                ▼
   ┌──────────────────────────┐
   │ PERFORM  MATCHING BETWEEN│─── S20
   │ VISUAL  FEATURES  OF  VIDEOS│
   └────────────┬─────────────┘
                │
                ▼
   ┌──────────────────────────┐
   │  SELECT VIDEO  SEGMENT   │─── S30
   │ OF  HIGH  SIMILARITY  VALUE│
   └────────────┬─────────────┘
                │
                ▼
   ┌──────────────────────────┐
   │   GENERATE  PARTICULAR   │─── S40
   │ VIDEO  PATTERN  INFORMATION│
   └────────────┬─────────────┘
                │
                ▼
          ┌──────────┐
          │   END    │
          └──────────┘
```

# FIG. 8

```
                    START

                      │
                      ▼
        ┌─────────────────────────────┐
        │   GENERATE ALTERED VIDEO     │────── S50
        └─────────────────────────────┘
                      │
                      ▼
        ┌─────────────────────────────┐
        │  EXTRACT VISUAL FEATURE FROM │────── S60
        │    VIDEO BEFORE ALTERATION   │
        └─────────────────────────────┘
                      │
                      ▼
        ┌─────────────────────────────┐
        │     EXTRACT VISUAL FEATURE   │────── S70
        │      FROM ALTERED VIDEO      │
        └─────────────────────────────┘
                      │
                      ▼
        ┌─────────────────────────────┐
        │   PERFORM MATCHING BETWEEN   │────── S80
        │  VISUAL FEATURES BEFORE AND  │
        │       AFTER ALTERATION       │
        └─────────────────────────────┘
                      │
                      ▼
        ┌─────────────────────────────┐
        │     SELECT VIDEO SEGMENT     │────── S90
        │   WHERE MATCHING RESULT      │
        │       LARGERY DIFFERS        │
        └─────────────────────────────┘
                      │
                      ▼
        ┌─────────────────────────────┐
        │    GENERATE PARTICULAR       │────── S100
        │  VIDEO PATTERN INFORMATION   │
        └─────────────────────────────┘
                      │
                      ▼
                    END
```

# FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007148264 A

### Non-patent literature cited in the description

- **KOTA IWAMOTO ; EIJI KASUTANI ; AKIO YAMADA.** Image Signature Robust to Caption Superimposition for Video Sequence Identification. *Proceedings of International Conference on Image Processing (ICIP2006),* 2006

- **EIJI KASUTANI ; RYOMA OAMI ; AKIO YAMADA ; TAKAMI SATO ; KYOJI HIRATA.** Video Material Archive System for Efficient Video Editing Based on Media Identification. *Proceedings of International Conference on Multimedia and Expo (ICME2004),* 2004, 727-730